# EUROPEAN PATENT SPECIFICATION

(11) **EP 2 073 991 B1**
(45) Date of publication and mention of the grant of the patent: **04.09.2013**
(21) Application number: 07808877.0
(22) Date of filing: 11.09.2007
(51) Int. Cl.: B60G 17/017, B60G 17/018

(54) **ELEVATION ADJUSTMENT OF VEHICLE CHASSIS ELEMENTS**
HÖHENEINSTELLUNG VON FAHRZEUGKAROSSERIEELEMENTEN
AJUSTEMENT DU SURELEVATION D'UN ELEMENT DU CHASSIS D'UN VEHICULE

(30) Priority: 22.09.2006 SE 0601975
(43) Date of publication of application: 01.07.2009
(73) Proprietor: Scania CV AB (PUBL), 151 87 Södertälje (SE)
(72) Inventor: STAVAEUS, Mikael, S-12639 Hägersten (SE); REIMDAL, Roine, S-64544 Strängnäs (SE); GRANSTRÖM, Magnus, S-12635 Hägersten (SE)
(86) International application number: PCT/SE2007/050640
(87) International publication number: WO 2008/036035

(56) References cited:
- EP-A1- 1 695 847
- EP-A2- 1 484 203
- US-A1- 2005 236 781
- US-B1- 6 202 010

## Description

### THE BACKGROUND OF THE INVENTION AND PRIOR ART

The present invention relates generally to automatic elevation of vehicle chassis elements. More particularly the invention relates to a system according to the preamble of claim 1 and a motor vehicle according to claim 7. The invention also relates to a method of adjusting an elevation of a motor vehicle's chassis element according to the preamble of claim 10, a computer program product according to claim 16 and a computer readable medium according to claim 17.

When loading cargo on and unloading cargo from heavy vehicles, such as trucks, tractors and tow vehicles, it is common practice to control the vehicle's load carrying arrangement, so that the load is elevated or lowered appropriately. For example, the height of the vehicle's cargo deck may be adjusted in level with a loading bridge.

Moreover, if a container, or equivalent cargo unit, being placed on support legs is to be loaded on a truck, a trailer, or a skip loader, it is normally efficient if the vehicle can be reversed under the container, and thereafter be elevated, such that the container's support legs are off-loaded, and subsequently can be disengaged.

WO03/000512 discloses an arrangement, which allows the elevation of a vehicle chassis to be adjusted between a loading level and a drive level. Here, the load to be carried by the wheel axles in the drive level is calculated during loading of the vehicle (i.e. when being positioned in the load level). Thus, appropriate loading is facilitated.

US, 6,470,248 describes a vehicle suspension control system, which enables automatic adjustment of at least one fluid-pressurized height adjusting member, so that a particular elevation of the vehicle's chassis can be maintained irrespective of the load being carried by the vehicle.

However, there is yet no solution that guarantees an optimal elevation control of a fluid operated load carrying chassis element of a vehicle (e.g. a truck, a trailer, or a skip loader) in connection with loading of a free-standing container, or equivalent cargo unit onto the vehicle, so that after having elevated the chassis element, the container's support legs can be disengaged safely. Instead, today, the chassis element in question is typically elevated exceedingly to ensure that the support legs are indeed off-loaded. Naturally, this is a time consuming procedure, which also results in that pressurized fluid (e.g. in the form of compressed air) is wasted.

### SUMMARY OF THE INVENTION

The object of the present invention is therefore to provide a solution, which alleviates the problem above, and thus offers an efficient elevation control that economizes the vehicle's pressurized fluid resources.

According to one aspect of the invention, the object is achieved by the initially described system, wherein during the elevation of the chassis element, the control unit is adapted to investigate whether or not a first criterion is fulfilled with respect to a test parameter expressing a ratio of the fluid pressure level increase per unit of the elevation. If the first criterion is fulfilled, the control unit is further adapted to investigate whether or not a second criterion is fulfilled with respect to the test parameter. In response to a fulfillment of the second criterion, the control unit is adapted to produce the control signal, such that the elevation of the chassis element is discontinued.

An important advantage attained by this system is that the chassis element can be elevated to a level being sufficient to allow a smooth disengagement of the support legs, however without risking any unnecessary elevation of the chassis element.

According to one embodiment of this aspect of the invention, the first criterion is fulfilled if a slope of the fluid pressure level expressed as a function of the elevation is positive. Hence, the fluid pressure increases as the chassis element is being elevated. Typically, this is equivalent to that the cargo unit is being lifted up.

Preferably, the first criterion is regarded to be fulfilled only if the slope of the fluid pressure level expressed as a function of the elevation lies within a first inclination interval throughout a first threshold elevation. Thus, any anomalies in the pressure-to-elevation relationship occurring before the cargo unit is actually lift up can be avoided to be erroneously registered as load lift-up.

According to another embodiment of this aspect of the invention, the second criterion is fulfilled upon non-fulfillment of the first criterion. Thereby, off-loading of the support legs can be detected in a simple and straightforward manner.

Preferably, however, the second criterion is fulfilled if the slope of the fluid pressure level expressed as a function of the elevation lies within a second inclination interval that ranges from a negative limit slope to a positive slope required to fulfill the first criterion. More preferably, the second criterion is regarded to be fulfilled if the slope of the fluid pressure level expressed as a function of the elevation lies within the second inclination interval throughout a second threshold elevation. Consequently, a robust and reliable detection of the off-loading of the support legs is attained.

According to another aspect of the invention, the object is achieved by a motor vehicle, which includes the above-proposed system.

According to one embodiment of this aspect of the invention, the vehicle includes a frame undercarriage whose elevation above the ground is adjustable along with the elevation of the chassis element. Moreover, the frame undercarriage is adapted to carry a swap container (open or closed), which represents the cargo unit. Hence, loading of so-called swap containers is facilitated.

According to one embodiment of this aspect of the invention, the vehicle includes a coupling arrangement of fifth-wheel type whose elevation above the ground is adjustable along with the elevation of the chassis element. Here, the coupling arrangement is adapted to be coupled to a trailer representing the cargo unit. Thereby, the procedure of coupling a trailer to the vehicle can be made highly efficient.

According to another aspect of the invention, the object is achieved by the method described initially, wherein during the elevation of the chassis element, it is investigated whether or not a first criterion is fulfilled with respect to a test parameter expressing a ratio of the fluid pressure level increase per unit of the elevation. If the first criterion is fulfilled, it is further investigated whether or not a second criterion is fulfilled with respect to the test parameter. Thereafter, in response to a fulfillment of the second criterion, the elevation of the chassis element is discontinued. The advantages of this method, as well as the preferred embodiments thereof, are apparent from the discussion hereinabove with reference to the proposed vehicle arrangement.

According to a further aspect of the invention the object is achieved by a computer program product directly loadable into the internal memory of a computer, comprising software for controlling the above proposed method when said program is run on a computer.

According to another aspect of the invention the object is achieved by a computer readable medium, having a program recorded thereon, where the program is to make a computer control the above proposed method.

Further advantages, advantageous features and applications of the present invention will be apparent from the following description and the dependent claims.

### BRIEF DESCRIPTION OF THE DRAWINGS

The present invention is now to be explained more closely by means of embodiments, which are disclosed as examples, and with reference to the attached drawings.
- Figure 1: schematically represents a motor vehicle and a free-standing cargo unit during an initial phase of an elevation procedure according to a first embodiment of the invention,
- Figure 2: shows the vehicle and the truck container of Figure 1 after that the container has been loaded onto the vehicle,
- Figure 3: schematically depicts a tow vehicle and a trailer during an initial phase of an elevation procedure according to a second embodiment of the invention,
- Figure 4: shows the tow vehicle and trailer of Figure 3 after that the trailer has been coupled to the vehicle,
- Figure 5: shows a diagram, which illustrates one example of a relationship between the elevation of a vehicle's chassis element and a pressure level in a fluid operated level control mechanism influencing the chassis element's elevation in connection with loading a cargo unit onto the vehicle, and
- Figure 6: shows a flow diagram illustrating the general method according to the invention.

### DESCRIPTION OF EMBODIMENTS OF THE INVENTION

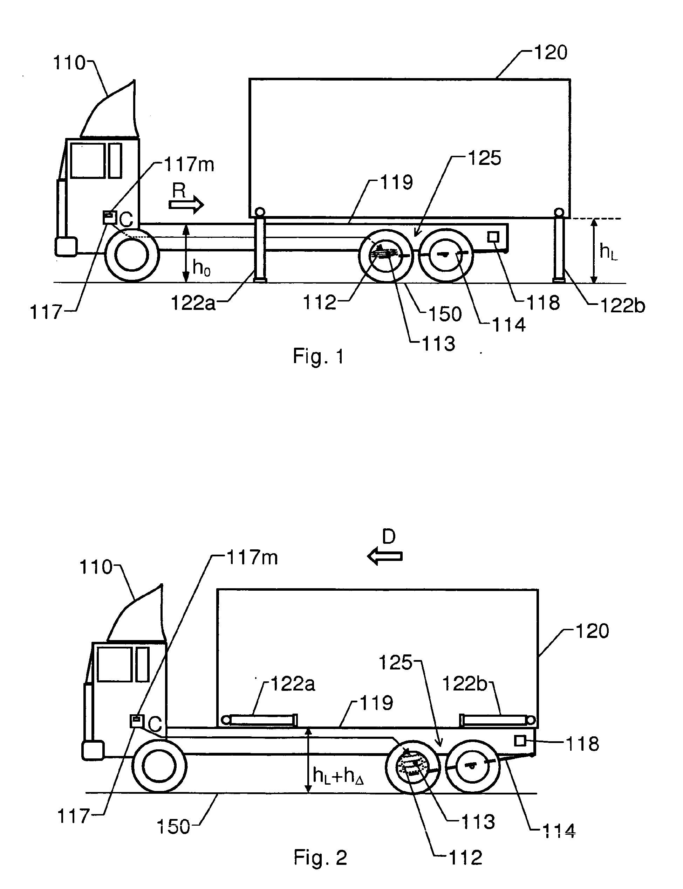

Figure 1 shows a vehicle 110, e.g. a truck, and a free-standing cargo unit 120, such as a swap container, being placed on a pair of support legs 122a and 122b extending towards a surface 150, typically the ground. Here, we presume that a chassis element 119 initially has an elevation h₀ above the surface 150 on which the vehicle 110 is situated. The elevation h₀ is sufficiently low to allow the chassis element 119 to be reversed R underneath the cargo unit 120. Figure 2 shows the vehicle 110 and the cargo unit 120 when the chassis element 119 has been elevated and the cargo unit 120 has been loaded onto the vehicle 110. Preferably, if the cargo unit 120 is a swap container, the vehicle 110 includes a frame undercarriage adapted to carry a swap container, and the elevation of the frame undercarriage above the surface 150 is adjustable along with the elevation of the chassis element 119.

Returning now to Figure 1, the vehicle 110 is equipped with a control system for adjusting the elevation of the chassis element 119 relative to the surface 150. Specifically, the control system includes a control unit 117, a fluid operated level control mechanism 112; 114, a height sensor means 118 and a pressure sensor means 113. The fluid operated level control mechanism is adapted to receive a control signal C, and in response thereto, influence the elevation of the chassis element 119. The fluid operated level control mechanism, in turn, may contain an expandable fluid chamber 112 and a lever arm arrangement 114, wherein the chamber 112 is mechanically linked to the lever arm arrangement 114, the latter further being pivotally connected to the chassis element 119 and at least one wheel arrangement 125. Thus, by manipulating the pressure in the fluid chamber 112 the level control mechanism 112; 114 may influence the elevation of the chassis element 119 above the surface 150. According to the invention, the fluid chamber 112 is operated in response to the control signal C. The fluid in the chamber 112 may either be a gas (e.g. compressed air), or a liquid depending on whether the chamber 112 forms part of a pneumatic or a hydraulic control system.

The height sensor means 118 is adapted to register a height parameter indicative of the elevation of the chassis element 119 above the surface 150. The height sensor means 118 may employ any known technique to determine the elevation, such as transmission of ultrasonic waves, and/or various forms of electromagnetic signals in the thermal, radio frequency and/or light range of the spectrum. In order to assess the height parameter, the means 118 and the chassis element 119 must have a fixed and well-defined positional interrelationship. However, the exact location of the means 118 is essentially irrelevant. Of course, it is preferable if the means 118 is located where it is relatively protected from physical damages and dirt. The pressure sensor means 113 is adapted to register a pressure parameter indicative of a fluid pressure level in a fluid chamber 112 of the level control mechanism, and report the registered fluid pressure to the control unit 117.

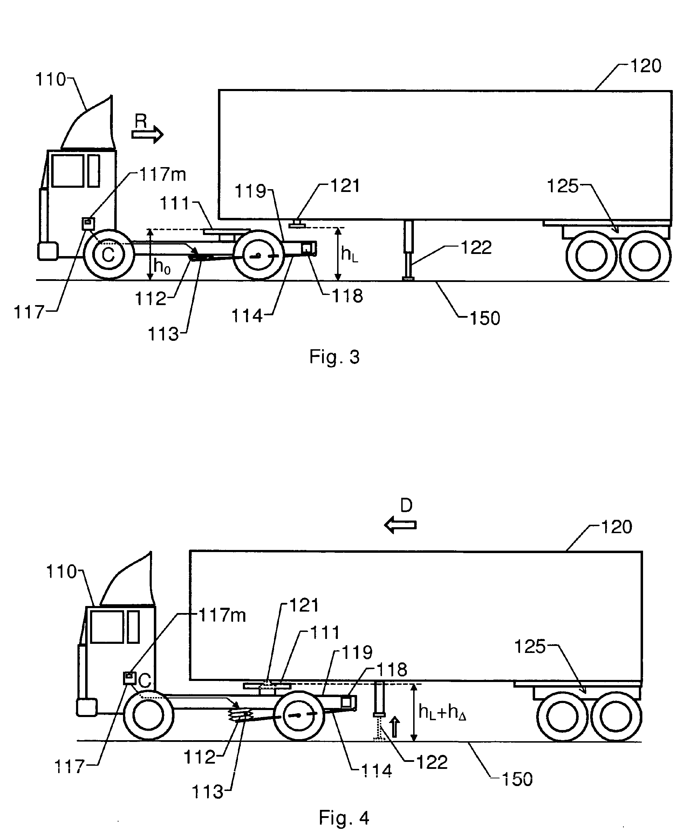

By means of the fluid operated level control mechanism 112; 114, the chassis element 119 can attain an elevation above as well as below the initial level h₀. The chassis element 119, in turn, is adapted to carry the cargo unit 120. Hence, by positioning the element 119 under the cargo unit 120, elevating the element 119, and thereafter disengaging the support legs 122a and 122b, the cargo unit 120 can be loaded onto the vehicle 110. Conversely, by engaging the support legs 122a and 122b, and lowering the element 119, the cargo unit 120 can be unloaded from the vehicle 110. Figure 1 shows a cargo unit 120 in the form of a truck container. Naturally, the invention is applicable to any type of loadable/ unloadable cargo unit, which is adapted to allow a stand-alone placing of the unit. Thus, the proposed solution may for instance be used for coupling a trailer having a fifth-wheel coupling to a tow vehicle. This will be exemplified below with reference to Figures 3 and 4.

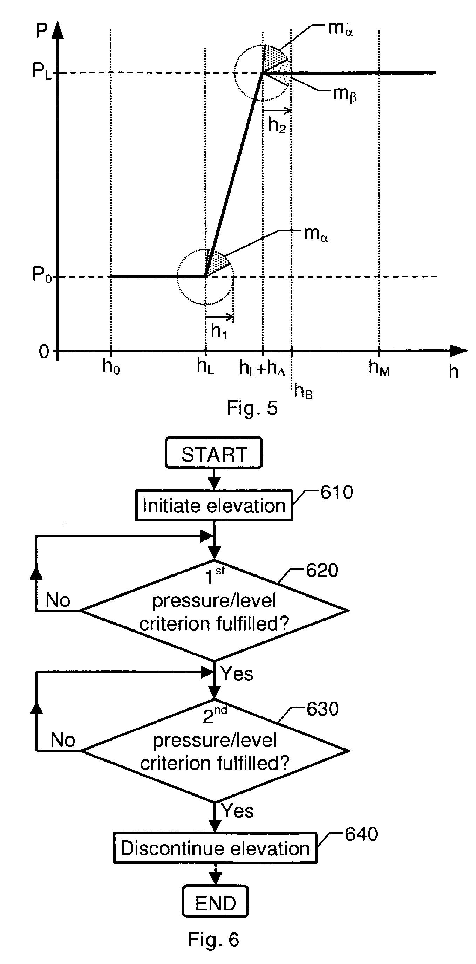

In any case, according to the invention, during elevation of the chassis element 119, the control unit 117 is adapted to investigate whether or not a first criterion is fulfilled with respect to a test parameter expressing a ratio of the fluid pressure level increase per unit of elevation. Figure 5 shows a diagram, which illustrates a typical relationship between the elevation h of the chassis element 119 and the pressure level P in a fluid operated level control mechanism that influences the chassis element's 119 elevation.

According to one embodiment of the invention, the first criterion is fulfilled if a slope of the fluid pressure level P expressed as a function of the elevation h is positive. In Figure 5, this situation occurs when the elevation h reaches h_{L} - a level at which the chassis element 119 first contacts with the cargo unit 120 (see also Figures 1 and 3). Up to this elevation (i.e. from the initial level h₀ to h < h_{L}), the fluid operated level control mechanism has only lifted the chassis element 119 as such. Therefore, the pressure level P in the fluid chamber 112 has remained essentially constant P₀. However, as of the elevation h = h_{L}, the fluid operated level control mechanism must also lift the cargo unit 120, or more precisely, must take over a larger and larger proportion of the cargo unit's 120 total weight. Consequently, the positive slope of a P/h-graph in Figure 5 (which represents the fluid pressure level P as a function of the elevation h) indicates that the chassis element 119 supports the cargo unit 120.

This indicator is used according to the invention. However, to avoid misinterpretation of the indicator (e.g. due to a minor increase of the pressure P in the interval h₀ to h_{L}), it may be advantageous to define the first criterion as fulfilled if the slope of the fluid pressure level P expressed as a function of the elevation h lies within a first inclination interval m_{α} throughout a first threshold elevation h₁ In Figure 5, this is illustrated by means of a first sector of a circle having a radius h₁ along the elevation axis h, where the first sector comprises positive slope angles, say 10° to 85°. Of course, the appropriate range of angles depend entirely on the scaling of the P- and h axes respectively. Nevertheless, by avoiding 0° and/or 90° and/or by assigning a non-zero value to the first threshold elevation h₁, the degree of false indicators of the fact that the chassis element 119 supports the cargo unit 120 can be kept relatively low.

Then, at an elevation h = h_{L} + h_{Δ}, the chassis element 119 has lifted the cargo unit 120 up to a level at which no more load will be transferred from the support legs 122a and 122b to the chassis element 119. In the example shown in Figures 1 and 2, this is equivalent to that the chassis element 119 carries the entire weight of the cargo unit 120 (i.e. in practice, h_{L} + h_{Δ} is typically equai to the heigh of the support legs 122a and 122b). However, as will be discussed below with reference to Figures 3 and 4, h_{L} + h_{Δ} need not be the elevation at which the chassis element 119 carries the *entire* weight of the cargo unit 120.

According to the invention, after that the first criterion has been fulfilled, the control unit 117 is adapted to investigate whether or not a second criterion is fulfilled with respect to the test parameter, i.e. the fluid pressure level P expressed as a function of the elevation h. In response to a fulfillment of the second criterion, the control unit 117 is further adapted to produce the control signal C, such that the elevation h of the chassis element 119 is discontinued. Now, the support legs 122a and 122b can be disengaged, and the vehicle 110 can be driven away D. Preferably, before driving away D, the chassis element 119 is adjusted to a drive level, which typically is lower than h_{L} + h_{Δ}. Naturally, any other level is likewise feasible from a technical point of view.

According to one embodiment of the invention, the second criterion is defined to be fulfilled whenever the first criterion is no longer fulfilled. Hence, depending on the definition of the first criterion, this may be equivalent to that the slope of the P/h-graph has a non-positive value. Namely, a leveling out of P/h-graph (as detected by the second criterion) is equivalent to the fact that the chassis element 119 has lifted the cargo unit 120 up to a level at which no more load will be transferred from the support legs 122a and 122b to the chassis element 119. This is another indicator used according to the invention.

According to another embodiment of the invention, the second criterion is defined to be fulfilled if the slope of the fluid pressure level P expressed as a function of the elevation h lies within a second inclination interval m_{β} ranging from a negative limit slope to a positive slope being equal to the slope required to fulfill the first criterion. More preferably, the second criterion is deemed to be fulfilled if the slope of the fluid pressure level P expressed as a function of the elevation h lies within the second inclination interval m_{β} throughout a second threshold elevation h₂. This may be advantageous, since thereby brief plateaus, or dips, in the P/h-graph can be tolerated without triggering the second criterion.

Preferably, the control unit 117 includes, or is associated with, a computer readable medium 117m, which has a program recorded thereon; where the program is adapted to make the unit 117 control the above-described procedure. Moreover, although the control unit 117 is here positioned in a cab of the vehicle 110, according to the invention, the control unit 117 may equally located elsewhere in the vehicle 110, such as in the chassis or frame thereof. Additionally, the proposed procedure is instigated in response to an operator command fed into the control unit 117. Said command may be generated by means of an input member for example in the form of a switch, a button or a lever arranged in the vehicle's 110 driver cab (e.g. in the instrument panel), or in an alternative unit, such as a remote control module operable both inside and outside of the vehicle 110.

We now refer to Figure 3, which schematically depicts a tow vehicle and a trailer according to another embodiment of the invention. In this case, the tow vehicle includes the adjustable chassis element 119 and the trailer represents the loadable/unloadable cargo unit 120. Here, in addition to at least one support leg 122, the cargo unit 120 is supported by a wheel arrangement 125. Hence, by extending the at least one support leg 122 towards a supporting surface 150, the trailer can be placed in a stand-alone position in which it is carried by the at least one support leg 122 plus the wheel arrangement 125.

All reference numerals in Figures 3 and 4 that also occur in Figures 1 and 2 designate the same elements as those described above with reference to Figures 1 and 2. Consequently, the tow vehicle 110 includes a fluid operated level control mechanism 112; 114, a height sensor means 118; a pressure sensor means 113 and a control unit 117. Furthermore, the fluid operated level control mechanism 112; 114 is adapted to influence the elevation of the chassis element 119 in response to a control signal C, and the height sensor means 118 is adapted to register a height parameter indicative of the elevation of the chassis element 119. The pressure sensor means 113 is adapted to register a pressure parameter indicative of a fluid pressure level in a fluid chamber 112 of the level control mechanism, and the control unit 117 is adapted to receive the height and pressure parameters, and in response thereto produce the control signal C. Here, however, the tow vehicle 110 also has a first coupling arrangement 111, e.g. of fifth-wheel type, being mechanically linked to the chassis element 119, so that the elevation of the first coupling arrangement 111 relative to the surface 150 is adjustable along with the adjustment of the chassis element 119. Moreover, in this embodiment of the invention, the trailer 120 is equipped with a second coupling arrangement 121, e.g. of kingpin type, which is adapted to be coupled to the first coupling arrangement 111 of the tow vehicle 110.

First, we assume that the trailer 120 is parked in a stand-alone position, such that the second coupling arrangement 121 has an initial elevation h_{L} over a surface 150 on which the trailer 120 and the vehicle 110 is located. At this point in time, the tow vehicle's 110 chassis element 119 has been adjusted so that the first coupling arrangement 111 is elevated to a level h₀ over the surface 150, where h₀ < h_{L}. Therefore, the tow vehicle 110 is sufficiently low to allow the chassis element 119 to be reversed R underneath a front portion of the trailer 120 where the second coupling arrangement 121 is located.

When the tow vehicle 110 is positioned with the first coupling arrangement 111 under a front section of the second coupling arrangement 121, the chassis element 119 is elevated until the first coupling arrangement 111 begins to support the trailer 120, i.e. up to h = h_{L} (see also Figure 5). Then, the tow vehicle 110 is reversed R somewhat more, such that the coupling arrangements 111 and 121 respectively can be interconnected. Before this final move backward it may be advantageous to lower the first coupling arrangement 111 slightly to allow a free (or at least reduced friction) lateral movement thereof under the second coupling arrangement 121. In any case, after having connected the first coupling arrangement 111 to the second coupling arrangement 121 , the chassis element 119 is elevated up to h = h_{L}+h_{Δ} as described above with reference to Figures 1, 2 and 5. Subsequently, the at least one support leg 122 can be disengaged and the vehicle 110 can be driven away D, thus towing the trailer 120. However, normally, before doing so, the chassis element 119 is adjusted to a drive level as described above.

In order to sum up, the general method according to the invention will be described below with reference to the flow diagram in Figure 6. It is here presumed that a cargo unit to be loaded onto a vehicle is placed in a free-standing position, wherein the cargo unit is at least partially supported by one or more support legs. It is also presumed that the vehicle has been adequately positioned underneath the cargo unit.

A first step 610 initiates elevation of the chassis element towards the cargo unit. Then, a step 620 investigates whether or not a first criterion is fulfilled with respect to a test parameter. The test parameter expresses a ratio of a fluid pressure level increase per unit of the elevation. The fluid pressure, in turn, is registered in a fluid operated level control mechanism for adjusting the elevation of the chassis element.

If the first criterion is fulfilled a step 630 follows. Otherwise the procedure loops back and stays in the step 620. The step 630 investigates whether or not a second criterion is fulfilled with respect to the test parameter. If the second criterion is fulfilled, a step 640 follows. Otherwise the procedure loops back and stays in the step 630.

The step 640 discontinues the elevation of chassis element. Thereafter, the procedure ends, and the cargo unit's support legs can be disengaged.

All of the process steps, as well as any sub-sequence of steps, described with reference to the Figure 6 above may be controlled by means of a programmed computer apparatus. Moreover, although the embodiments of the invention described above with reference to the drawings comprise computer apparatus and processes performed in computer apparatus, the invention thus also extends to computer programs, particularly computer programs on or in a carrier, adapted for putting the invention into practice. The program may be in the form of source code; object code, a code intermediate source and object code such as in partially compiled form, or in any other form suitable for use in the implementation of the process according to the invention. The carrier may be any entity or device capable of carrying the program. For example, the carrier may comprise a storage medium, such as a Flash memory, a ROM (Read Only Memory), for example a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal which may be conveyed directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

The invention is not restricted to the described embodiments in the figures, but may be varied freely within the scope of the claims.

## Claims

1. A system for adjusting an elevation (h) of a motor vehicle's (110) chassis element (119) above a surface (150) on which the vehicle (110) is situated, the chassis element (119) being adapted to carry a loadable and unloadable cargo unit (120), the cargo unit (120) having at least one support leg (122; 122a, 122b) adapted to, when in an engaged position extended towards the surface (150), allow a stand-alone placing of the cargo unit (120), the system comprising:
a fluid operated level control mechanism (112, 114) adapted to influence the elevation (h) in response to a control signal (C),
a height sensor means (118) adapted to register a height parameter indicative of the elevation (h),
a pressure sensor means (113) adapted to register a pressure parameter indicative of a fluid pressure level (P) in a fluid chamber (112) of the level control mechanism, and
a control unit (117) adapted to receive the height and pressure parameters, and in response thereto produce the control signal (C), **characterized in that** the control unit (117) is adapted to, during the elevation of the chassis element (119):
investigate whether or not a first criterion is fulfilled with respect to a test parameter expressing a ratio of the fluid pressure level (P) increase per unit of the elevation (h), and if the first criterion is fulfilled
investigate whether or not a second criterion is fulfilled with respect to the test parameter, and in response to a fulfillment of the second criterion
produce the control signal (C) such that the elevation of the chassis element (119) is discontinued.

2. The system according to claim 1, **characterized in that** the first criterion is fulfilled if a slope of the fluid pressure level (P) expressed as a function of the elevation (h) is positive.

3. The system according to claim 2, **characterized in that** the first criterion is fulfilled if the slope of the fluid pressure level (P) expressed as a function of the elevation (h) lies within a first inclination interval (m_{α}) throughout a first threshold elevation (h₁).

4. The system according to any one of the preceding claims, **characterized in that** the second criterion if fulfilled upon non-fulfillment of the first criterion.

5. The system according to claim 4, **characterized in that** the second criterion is fulfilled if the slope of the fluid pressure level (P) expressed as a function of the elevation (h) lies within a second inclination interval (m_{β}) ranging from a negative limit slope to a positive slope required to fulfill the first criterion.

6. The system according to claim 5, **characterized in that** the second criterion is fulfilled if the slope of the fluid pressure level (P) expressed as a function of the elevation (h) lies within the second inclination interval (m_{β}) throughout a second threshold elevation (h₂).

7. A motor vehicle (110) comprising the control system according to any one of the claims 1 to 6.

8. The motor vehicle (110) according to claim 7, **characterized in that** the vehicle (110) comprises a frame undercarriage whose elevation above the surface (150) is adjustable along with the elevation (h) of the chassis element (119), and the frame undercarriage is adapted to carry a swap container representing the cargo unit (120).

9. The motor vehicle (110) according to claim 7, **characterized in that** the vehicle (110) comprises a coupling arrangement (111) of fifth-wheel type whose elevation above the surface (150) is adjustable along with the elevation (h) of the chassis element (119), and the coupling arrangement (111) is adapted to be coupled to a trailer representing the cargo unit (120).

10. A method of adjusting an elevation (h) of a motor vehicle's (110) chassis element (119) above a surface (150) on which the vehicle (110) is situated, the chassis element (119) being adapted to carry a loadable and unloadable cargo unit (120), the elevation (h) being adjusted by means of a fluid operated level control mechanism (112, 114), the cargo unit (120) having at least one support leg (122; 122a, 122b) adapted to, when in an engaged position extended towards the surface (150), allow a stand-alone placing of the cargo unit (120), the method comprising elevating the chassis element (119) relative to the ground (150), registering a height parameter indicative of the elevation (h) and registering a fluid pressure level (P) in a fluid chamber (112) of the level control mechanism, **characterized by**, during the elevation of the chassis element (119),
investigating whether or not a first criterion is fulfilled with respect to a test parameter expressing a ratio of the fluid pressure level (P) increase per unit of the elevation (h), and if the first criterion is fulfilled
investigating whether or not a second criterion is fulfilled with respect to the test parameter, and
discontinuing the elevation of the chassis element (119) in response to a fulfillment of the second criterion.

11. The method according to claim 10, **characterized by** the first criterion being fulfilled if a slope of the fluid pressure level (P) expressed as a function of the elevation (h) is positive.

12. The method according to claim 11, **characterized by** the first criterion being fulfilled if the slope of the fluid pressure level (P) expressed as a function of the elevation (h) lies within a first inclination interval (m_{α}) throughout a first threshold elevation (h₁).

13. The method according to any one of the claims 10 to 12, **characterized by** the second criterion being fulfilled upon non-fulfillment of the first criterion

14. The method according to claim 13, **characterized by** the second criterion being fulfilled if the slope of the fluid pressure revel (P) expressed as a function of the elevation (h) lies within a second inclination interval (m_{β}) ranging from a negative limit slope to a positive slope required to fulfill the first criterion.

15. The method according to claim 14, **characterized by** the second criterion being fulfilled if the slope of the fluid pressure level (P) expressed as a function of the elevation (h) lies within the second inclination interval (m_{β}) throughout a second threshold elevation (h₂).

16. A computer program product directly loadable into the internal memory of a computer, comprising software for controlling the steps of any of the claims 10 to 15 when said program is run on the computer.

17. A computer readable medium (117m), having a program recorded thereon, where the program is to make a computer control the steps of any of the claims 10 to 15.

## Patentansprüche

1. System zum Anpassen einer Höhe (h) eines Fahrgestellelements (119) eines Kraftfahrzeugs (110) über einer Fläche (150), auf der sich das Fahrzeug (110) befindet, wobei das Fahrgestellelement (119) dazu eingerichtet ist, eine beladbare und entladbare Frachteinheit (120) zu tragen, wobei die Frachteinheit (120) wenigstens ein Stützbein (122; 122a, 122b) aufweist, das dazu eingerichtet ist, in einer sich in Richtung der Fläche (150) erstreckenden aktiven Stellung ein eigenständiges Abstellen der Frachteinheit (120) zu ermöglichen, wobei das System umfasst:
einen fluidbetriebenen Niveausteuermechanismus (112, 114), der dazu eingerichtet ist, die Höhe (h) in Reaktion auf ein Steuersignal (C) zu beeinflussen,
ein Höhensensormittel (118), das dazu eingerichtet ist, einen die Höhe (h) anzeigenden Höhenparameter zu registrieren,
ein Drucksensormittel (113), das dazu eingerichtet ist, einen ein Fluiddruckniveau (P) in einer Fluidkammer (112) des Niveausteuermechanismus anzeigenden Parameter zu registrieren, und
eine Steuereinheit (117), die dazu eingerichtet ist, die Höhen- und Druckparameter zu erhalten und in Reaktion darauf das Steuersignal (C) zu erzeugen,
**dadurch gekennzeichnet, dass** die Steuereinheit (117) dazu eingerichtet ist, während des Erhöhens des Fahrgestellelements (119):
zu ermitteln, ob ein erstes Kriterium hinsichtlich eines Testparameters erfüllt ist oder nicht, der ein Verhältnis der Fluiddruckniveauerhöhung (P) pro Einheit der Höhe (h) ausdrückt, und dann, wenn das erste Kriterium erfüllt ist,
zu ermitteln, ob ein zweites Kriterium hinsichtlich des Testparameters erfüllt ist oder nicht, und in Reaktion auf ein Erfüllen des zweiten Kriteriums
das Steuersignal (C) derart zu erzeugen, dass das Erhöhen des Fahrgestellelements (119) unterbrochen wird.

2. System nach Anspruch 1,
**dadurch gekennzeichnet, dass** das erste Kriterium erfüllt ist, wenn ein Anstieg des als Funktion der Höhe (h) ausgedrückten Fluiddruckniveaus (P) positiv ist.

3. System nach Anspruch 2,
**dadurch gekennzeichnet, dass** das erste Kriterium erfüllt ist, wenn der Anstieg des als Funktion der Höhe (h) ausgedrückten Fluiddruckniveaus (P) innerhalb eines ersten Steigungsintervalls (m_{α}) während einer ersten Schwellenerhöhung (h₁) liegt.

4. System nach einem der vorangehenden Ansprüche,
**dadurch gekennzeichnet, dass** das zweite Kriterium bei einem Nichterfüllen des ersten Kriteriums erfüllt ist.

5. System nach Anspruch 4,
**dadurch gekennzeichnet, dass** das zweite Kriterium erfüllt ist, wenn der Anstieg des als Funktion der Höhe (h) ausgedrückten Fluiddruckniveaus (P) innerhalb eines zweiten Steigungsintervalls (m_{β}) liegt, das von einem negativen Grenzanstieg zu einem positiven Anstieg reicht, der zum Erfüllen des ersten Kriteriums erforderlich ist.

6. System nach Anspruch 5,
**dadurch gekennzeichnet, dass** das zweite Kriterium erfüllt ist, wenn der Anstieg des als Funktion der Höhe (h) ausgedrückten Fluiddruckniveaus (P) innerhalb des zweiten Steigungsintervalls (m_{β}) während einer zweiten Schwellenerhöhung (h₂) liegt.

7. Kraftfahrzeug (110),
umfassend das Steuersystem nach einem der Ansprüche 1 bis 6.

8. Kraftfahrzeug (110) nach Anspruch 7,
**dadurch gekennzeichnet, dass** das Fahrzeug (110) einen Fahrwerksrahmen umfasst, dessen Höhe über der Oberfläche (150) mit der Höhe (h) des Fahrgestellelements (119) anpassbar ist, und der Fahrgestellrahmen dazu eingerichtet ist, einen die Frachteinheit (120) darstellenden Wechselcontainer zu tragen.

9. Kraftfahrzeug (110) nach Anspruch 7,
**dadurch gekennzeichnet, dass** das Fahrzeug (110) eine Kupplungsanordnung (111) nach Sattelkupplungsbauart umfasst, dessen Höhe über der Fläche (150) mit der Höhe (h) des Fahrgestellelements (119) anpassbar ist, und die Kupplungsanordnung (111) dazu eingerichtet ist, mit einem die Frachteinheit (120) darstellenden Anhänger gekoppelt zu werden.

10. Verfahren zum Anpassen einer Höhe (h) eines Fahrgestellelements (119) eines Kraftfahrzeugs (110) über einer Fläche (150), auf der sich das Fahrzeug (110) befindet, wobei das Fahrgestellelement (119) dazu eingerichtet ist, eine beladbare und entladbare Frachteinheit (120) zu tragen, wobei die Höhe (h) mittels eines fluidbetriebenen Niveausteuermechanismus (112, 114) angepasst wird, wobei die Frachteinheit (120) wenigstens ein Stützbein (122; 122a, 122b) aufweist, das dazu eingerichtet ist, in einer sich in Richtung der Fläche (150) erstreckenden aktiven Stellung ein eigenständiges Abstellen der Frachteinheit (120) zu ermöglichen, wobei das Verfahren das Erhöhen des Fahrgestellelements (119) relativ zur Fläche (150) umfasst, das Registrieren eines die Höhe (h) anzeigenden Höhenparameters und das Registrieren eines Fluiddruckniveaus (P) in einer Fluidkammer (112) des Niveausteuermechanismus anzeigenden Parameter, **gekennzeichnet durch**, während des Erhöhens des Fahrgestellelements (119),:
Ermitteln, ob ein erstes Kriterium hinsichtlich eines Testparameters erfüllt ist oder nicht, der ein Verhältnis der Fluiddruckniveauerhöhung (P) pro Einheit der Höhe (h) ausdrückt, und wenn das erste Kriterium erfüllt ist
Ermitteln, ob ein zweites Kriterium hinsichtlich des Testparameters erfüllt ist oder nicht, und
Unterbrechen des Erhöhens des Fahrgestellelements (119), in Reaktion auf ein Erfüllen des zweiten Kriteriums.

11. Verfahren nach Anspruch 10,
**dadurch gekennzeichnet, dass** das erste Kriterium erfüllt ist, wenn ein Anstieg des als Funktion der Höhe (h) ausgedrückten Fluiddruckniveaus (P) positiv ist.

12. Verfahren nach Anspruch 11,
**dadurch gekennzeichnet, dass** das erste Kriterium erfüllt ist, wenn der Anstieg des als Funktion der Höhe (h) ausgedrückten Fluiddruckniveaus (P) innerhalb eines ersten Steigungsintervalls (m_{α}) während einer ersten Schwellenerhöhung (h₁) liegt.

13. Verfahren nach einem der Ansprüche 10 bis 12,
**dadurch gekennzeichnet, dass** das zweite Kriterium bei einem Nichterfüllen des ersten Kriteriums erfüllt ist.

14. Verfahren nach Anspruch 13,
**dadurch gekennzeichnet, dass** das zweite Kriterium erfüllt ist, wenn der Anstieg des als Funktion der Höhe (h) ausgedrückten Fluiddruckniveaus (P) innerhalb eines zweiten Steigungsintervalls (m_{β}) liegt, das von einem negativen Grenzanstieg zu einem positiven Anstieg reicht, der zum Erfüllen des ersten Kriteriums erforderlich ist.

15. Verfahren nach Anspruch 14,
**dadurch gekennzeichnet, dass** das zweite Kriterium erfüllt ist, wenn der Anstieg des als Funktion der Höhe (h) ausgedrückten Fluiddruckniveaus (P) innerhalb des zweiten Steigungsintervalls (m_{β}) während einer zweiten Schwellenerhöhung (h₂) liegt.

16. Computerprogrammprodukt, das direkt in den internen Speicher eines Computers ladbar ist, umfassend Software zum Steuern der Schritte nach einem der Ansprüche 10 bis 15, wenn das Programm auf dem Computer ausgeführt wird.

17. Computerlesbares Medium (117m),
aufweisend ein darauf gespeichertes Programm, wobei das Programm einen Computer veranlasst, die Schritte nach einem der Ansprüche 10 bis 15 zu steuern.

## Revendications

1. Système pour régler l'élévation (h) d'un élément de châssis (119) d'un véhicule à moteur (110) au-dessus d'une surface (150) sur laquelle repose le véhicule (110), l'élément de châssis (119) étant adapté de façon à supporter une unité de chargement pouvant être chargée et déchargée (120), l'unité de chargement (120) comportant au moins un pied support (122 ; 122a, 122b) adapté de façon à permettre, lorsqu'il est en position de blocage, déplié en direction de la surface (150), un positionnement autonome de l'unité de chargement (120), le système comprenant :
un mécanisme de commande de niveau actionné par un fluide (112, 114) adapté de façon à influencer l'élévation (h) en réponse à un signal de commande (C),
un moyen formant capteur de hauteur (118) adapté de façon à enregistrer un paramètre de hauteur indicatif de l'élévation (h),
un moyen formant capteur de pression (113) adapté de façon à enregistrer un paramètre de pression indicatif d'un niveau de pression de fluide (P) dans une chambre de fluide (112) du mécanisme de commande de niveau, et
une unité de commande (117) adaptée de façon à recevoir les paramètres de hauteur et de pression, et, en réponse à ceux-ci, à produire le signal de commande (C), **caractérisé en ce que** l'unité de commande (117) est adaptée de façon, durant l'élévation de l'élément de châssis (119), à :
examiner, si oui ou non, un premier critère est satisfait vis-à-vis d'un paramètre de test exprimant un taux d'augmentation du niveau de pression de fluide (P) par unité d'élévation (h), et, si le premier critère est satisfait,
examiner, si oui ou non, un deuxième critère est satisfait vis-à-vis du paramètre de test, et, en réponse à la satisfaction du deuxième critère,
produire le signal de commande (C) de telle sorte que l'élévation de l'élément de châssis (119) soit interrompue.

2. Système selon la revendication 1, **caractérisé en ce que** le premier critère est satisfait si une pente du niveau de pression de fluide (P) exprimée en fonction de l'élévation (h) est positive.

3. Système selon la revendication 2, **caractérisé en ce que** le premier critère est satisfait si la pente du niveau de pression de fluide (P) exprimée en fonction de l'élévation (h) se trouve à l'intérieur d'un premier intervalle d'inclinaison (m_{α}) tout au long d'une première élévation de seuil (h₁).

4. Système selon l'une quelconque des revendications précédentes, **caractérisé en ce que** le deuxième critère est satisfait lors de la non satisfaction du premier critère.

5. Système selon la revendication 4, **caractérisé en ce que** le deuxième critère est satisfait si la pente du niveau de pression de fluide (P) exprimée en fonction de l'élévation (h) se trouve à l'intérieur d'un deuxième intervalle d'inclinaison (m_{β}) compris entre une pente limite négative et une pente positive requise pour satisfaire au premier critère.

6. Système selon la revendication 5, **caractérisé en ce que** le deuxième critère est satisfait si la pente du niveau de pression de fluide (P) exprimée en fonction de l'élévation (h) se trouve à l'intérieur du deuxième intervalle d'inclinaison (m_{β}) tout au long d'une deuxième élévation de seuil (h₂).

7. Véhicule à moteur (110) comprenant le système de commande selon l'une quelconque des revendications 1 à 6.

8. Véhicule à moteur (110) selon la revendication 7, **caractérisé en ce que** le véhicule (110) comprend un train roulant de châssis dont l'élévation au-dessus de la surface (150) est réglable avec l'élévation (h) de l'élément de châssis (119), et **en ce que** le train roulant de châssis est adapté de façon à supporter un conteneur permutable représentant l'unité de chargement (120).

9. Véhicule à moteur (110) selon la revendication 7, **caractérisé en ce que** le véhicule (110) comprend un agencement d'accouplement (111) du type à cinquième roue, dont l'élévation au-dessus de la surface (150) est réglable avec l'élévation (h) de l'élément de châssis (119), et **en ce que** l'agencement d'accouplement (111) est adapté de façon à être accouplé à une remorque représentant l'unité de chargement (120).

10. Procédé pour régler l'élévation (h) d'un élément de châssis (119) d'un véhicule à moteur (110) au-dessus d'une surface (150) sur laquelle repose le véhicule (110), l'élément de châssis (119) étant adapté de façon à supporter une unité de chargement pouvant être chargée et déchargée (120), l'élévation (h) étant réglée à l'aide d'un mécanisme de commande de niveau actionné par un fluide (112, 114), l'unité de chargement (120) comportant au moins un pied support (122 ; 122a, 122b) adapté de façon à permettre, lorsqu'il est en position de blocage, déplié en direction de la surface (150), un positionnement autonome de l'unité de chargement (120), le procédé comprenant l'élévation de l'élément de châssis (119) par rapport au sol (150), l'enregistrement d'un paramètre de hauteur indicatif de l'élévation (h) et l'enregistrement d'un niveau de pression de fluide (P) dans une chambre de fluide (112) du mécanisme de commande de niveau, caractérisé, durant l'élévation de l'élément de châssis (119), par :
l'analyse vérifiant si, oui ou non, un premier critère est satisfait vis-à-vis d'un paramètre de test exprimant un taux d'augmentation du niveau de pression de fluide (P) par unité d'élévation (h), et, si le premier critère est satisfait,
l'analyse vérifiant si, oui ou non, un deuxième critère est satisfait vis-à-vis du paramètre de test, et
l'interruption de l'élévation de l'élément de châssis (119) en réponse à la satisfaction du deuxième critère.

11. Procédé selon la revendication 10, **caractérisé en ce que** le premier critère est satisfait si une pente du niveau de pression de fluide (P) exprimée en fonction de l'élévation (h) est positive.

12. Procédé selon la revendication 11, **caractérisé en ce que** le premier critère est satisfait si la pente du niveau de pression de fluide (P) exprimée en fonction de l'élévation (h) se trouve à l'intérieur d'un premier intervalle d'inclinaison (mₐ) tout au long d'une première élévation de seuil (h₁).

13. Procédé selon l'une quelconque des revendications 10 à 12, **caractérisé en ce que** le deuxième critère est satisfait lors de la non satisfaction du premier critère.

14. Procédé selon la revendication 13, **caractérisé en ce que** le deuxième critère est satisfait si la pente du niveau de pression de fluide (P) exprimée en fonction de l'élévation (h) se trouve à l'intérieur d'un deuxième intervalle d'inclinaison (mₐ) compris entre une pente limite négative et une pente positive requise pour satisfaire au premier critère.

15. Procédé selon la revendication 14, **caractérisé en ce que** le deuxième critère est satisfait si la pente du niveau de pression de fluide (P) exprimée en fonction de l'élévation (h) se trouve à l'intérieur du deuxième intervalle d'inclinaison (mβ) tout au long d'une deuxième élévation de seuil (h₂).

16. Produit de programme informatique pouvant être directement chargé dans la mémoire interne d'un ordinateur, comprenant un logiciel pour commander les étapes selon l'une quelconque des revendications 10 à 15 lorsque ledit programme est exécuté sur l'ordinateur.

17. Support lisible par un ordinateur (117m), comportant un programme enregistré sur celui-ci, le programme étant destiné à faire commander par un ordinateur les étapes selon l'une quelconque des revendications 10 à 15.
